Europäisches Patentamt

European Patent Office

Office européen des brevets

(11) Veröffentlichungsnummer: **0 394 512**
A1

(12) **EUROPÄISCHE PATENTANMELDUNG**

(21) Anmeldenummer: 89107466.8

(22) Anmeldetag: 25.04.89

(51) Int. Cl.5: **H02K 7/08, F16C 17/08**

(43) Veröffentlichungstag der Anmeldung:
**31.10.90 Patentblatt 90/44**

(84) Benannte Vertragsstaaten:
**DE FR**

(71) Anmelder: **Siemens Aktiengesellschaft**
**Wittelsbacherplatz 2**
**D-8000 München 2(DE)**

(72) Erfinder: **Adam, Peter, Dipl.-Ing. (FH)**
**Allerseeweg 25**
**D-8706 Höchberg(DE)**
Erfinder: **Deynet, Rolf, Dipl.-Ing.**
**Franz-Stadelmayer-Strasse 9**
**D-8700 Würzburg(DE)**
Erfinder: **Gleixner, Ronald, Dipl.-Ing.(FH)**
**Hübnerweg 21**
**D-8703 Ochsenfurt(DE)**

(54) **Anordnung zur Begrenzung des Axialspiels der Welle eines Motorantriebs.**

(57) Zur fertigungs- und montagetechnisch einfachen genauen Einstellung eines auch sehr kleinen Axialspiels ($\ll 0,05$ mm) bei einer gegen eine Anlaufscheibe (2) anlaufenden Stirnseite der Welle (13) wird erfindungsgemäß vorgeschlagen, die randseitig fixierte Anlaufscheibe (2) durch eine axial vorgelagerte, gehäuseseitig abgestützte Einstellschraube (3), insbesondere eine Serien-Normschraube, in ihrer Anlaufzone (21) axial soweit zu drücken, bis das gewünschte Axialspiel erreicht ist.

FIG 2

EP 0 394 512 A1

Die Erfindung bezieht sich auf eine Anordnung zur Begrenzung des Axialspiels der Welle eines Motorantriebs gemäß Oberbegriff des Anspruchs 1; eine derartige Anordnung ist durch die EP-B1-0 133 527 bekannt.

Bei der vorgenannten bekannten Anordnung wird in die Anlaufscheibe vor ihrem Einstecken in eine gehäusefeste Tasche des Motorantriebs eine Anlaufwarze mit entsprechend dem vorherigen Vergleich zwischen Ist-Axialspiel und Soll-Axialspiel definierter Warzenlänge eingeformt.

Durch die DE-A2-28 09 390 ist es weiterhin bekannt, zur Einstellung des Axialspiels einer Motorgetriebewelle in einem Getriebemotor die Ankerwelle an ihrem motorseitigen Ende mit Spiel in eine Bohrung einer Einstellschraube mit axial zur Stirnseite der Welle angeformtem Anlaufpilz hineinragen zu lassen und am Motorgehäusedeckel einstellbar festzulegen.

Gemäß Aufgabe vorliegender Erfindung soll in fertigungs- und montagetechnisch einfacher Weise eine sehr genaue Einstellung eines auch sehr kleinen Axialspiels bei einer gegen eine Anlaufscheibe anlaufenden Stirnseite der Welle ermöglicht werden. Die Lösung der gestellten Aufgabe gelingt bei einer Anordnung zur Begrenzung des Axialspiels der eingangs genannten Art durch die Lehre des Anspruchs 1; vorteilhafte Ausgestaltungen der Erfindung sind jeweils Gegenstand der Unteransprüche.

Die erfindungsgemäße Anordnung zur Begrenzung des Axialspiels erlaubt bei bereits im Gehäuse des Motorantriebs montierten Einstellmitteln eine sehr genaue Einstellung des Axialspiels durch Verdrehen der Einstellschraube, wobei auf eine gesonderte konstruktive Ausbildung der Einstellschraube, z.B. mit einem stirnseitigen Anlaufpilz, aufgrund der zwischengelegten Anlaufscheibe verzichtet werden kann.

Wird nach einer Ausgestaltung der Erfindung die Einstellschraube aus Kunststoff hergestellt, so ergibt sich in besonders einfacher Weise eine Sicherung gegen ein ungewolltes Rückdrehen der Einstellschraube aus ihrer Einstellstellung durch Anformung eines Sperrzahnrändels mit entgegen der Rückdrehrichtung an der Schraubfassung spreizbaren Sperrzähnen, die sich beim Rückdrehversuch in der konzentrischen Schraubfassung verkrallen können. In besonders einfacher Weise kann eine Sicherung gegen ein ungewolltes Rückdrehen und/oder eine Abdichtung einer die Einstellschraube aufnehmenden, nach axial außen offenen Gehäuseöffnung dadurch erreicht werden, daß die Gehäuseöffnung durch eine an die Einstellschraube angeformte Dichtkappe feuchtigkeitsdicht abschließbar ist, die aus einer zur Einstellschraube konzentrischen in die Gehäuseöffnung einpreßbaren Dichthülse und einem insbesondere radial und axial elastischen faltenbalgartigen Dichtmantel zwischen der Dichthülse und dem äußeren Umfang der Einstellschraube besteht.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

FIG 1 einen axialen Längsschnitt durch einen Fensterheber-Motorantrieb für ein Kraftfahrzeug mit von außen bedienbarer Einstellschraube,

FIG 2 das linke Ende der Welle in einem Detailausschnitt aus FIG 1, jedoch mit abdichtbarer Gehäuseöffnung für die Axialspiel-Einstellschraube,

FIG 3 einen Schnitt durch FIG 2 gemäß Schnittverlauf III-III,

FIG 4 einen Schnitt durch FIG 2 gemäß Schnittverlauf IV-IV,

FIG 5 eine Alternativausführung zu FIG 2 mit einer geänderten Abdichtung der Gehäuseöffnung in eine Vormontagestellung von Einstellschraube und Dichtung,

FIG 6 die Alternativausführung gemäß FIG 5 in Endmontagestellung,

FIG 7 eine axiale Draufsicht auf eine Anlaufscheibe,

FIG 8 eine Seitenansicht der Anlaufscheibe gemäß FIG 7.

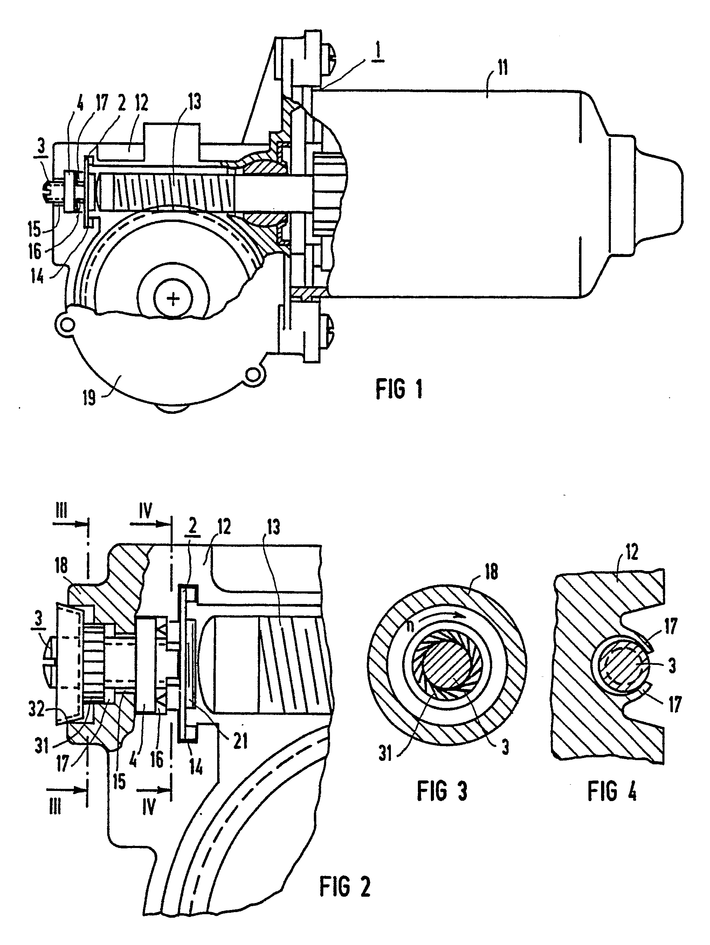

FIG 1 zeigt in einem axialen Längsschnitt einen Motorantrieb mit in einem Elektromotorgehäuse 11 untergebrachtem permanentmagneterregten Kommutatormotor und in einem an das Elektromotorgehäuse 11 angeflanschten Getriebegehäuse 12 untergebrachtem Schneckengetriebe. Eine durchgehende Welle 13 ragt mit ihrem linken, mit einer Schneckenverzahnung versehenen Ende in das angeflanschte Getriebegehäuse 12 und kämmt dort mit einem Schneckenrad. Das Elektromotorgehäuse 11 besteht aus einem topfförmig tiefgezogenen Blechteil; das Getriebegehäuse 12 wird von einem schalenförmigen Gußteil gebildet, in das die Getriebeteile radial einlegbar sind und das anschließend durch einen Gehäusedeckel 19 verschließbar ist.

Zur Axialspieleinstellung der Welle 13 dienen im wesentlichen eine Einstellschraube 3 und eine Anlaufscheibe 2 zwischen der motorinneren rechten Stirnseite der Einstellschraube 3 und der Stirnseite des linken Endes der Welle 2. Zur besonders einfachen Montage sind gemäß dem Ausführungsbeispiel nach FIG 1 sowohl die Anlaufscheibe 2 als auch die Einstellschraube 3 sowie eine als Schraubabstützung für die Einstellschraube 3 vorgesehene und somit ein gesondertes Gewindeschneiden des Getriebegehäuses 12 erübrigende Schraubenmutter 4 in Taschen 14 bzw.15 im Getriebegehäuse 12 eingelegt und anschließend bei der Endmontage durch das Gegenlegen des Gehäusedeckels 19 entgegen der Einstecklage gesichert. Bei den Ausgestaltungen gemäß FIG 2, 5,6 ist die Einstellschraube 3 am linken äußeren Ende des Getriebegehäuses 12 durch eine zylindrische Gehäuseöffnung 18 eingeführt und liegt mit ihrem übrigen Ende in einer Tasche 16 des Getriebegehäuses 12. Zur Einstellfixierung der Einstellschraube 3 nach der Axialspieleinstelung sind am rechten Ende der Einstellschraube 3 nach einer Ausgestaltung der Erfindung am Getriebegehäuse 12 Verstemmlappen 17 vorgesehen, die auf die Einstellschraube 3 zubiegbar sind.

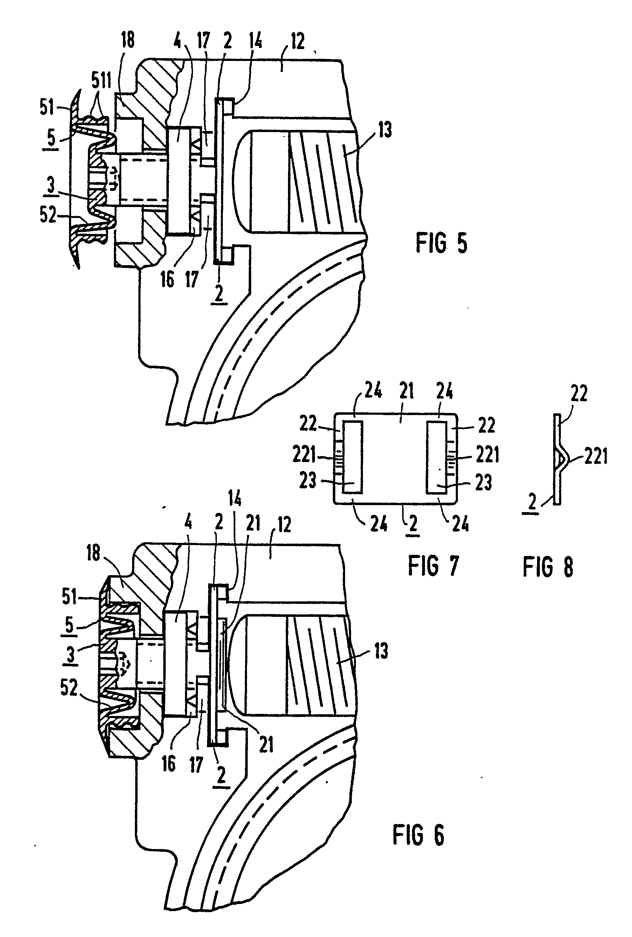

Zur Lagefixierung der Anlaufscheibe 2 in ihrer Tasche 14 unter Berücksichtigung einer auch in rauhem Betriebseinsatz und bei langen Betriebszeiten festen Halterung weist - wie insbes. aus FIG 7,8 ersichtlich - die Anlaufscheibe 2 randseitige Klemmbereiche 22 mit eingeformten, zwischen den Wänden der Tasche 14 elastisch eindrückbaren Klemmbuckeln 221 auf.

Zur Einstellung des Axialspiels wird aufgrund des jeweiligen Vergleichs zwischen Ist-Axialspiel und Soll-Axialspiel nach dem Zusammenbau des Motors die Einstellschraube 3 unter Abstützung in der Schraubenmutter 4 bei Anlage an der Anlaufscheibe 2 soweit in das Getriebegehäuse 12 eingedreht, bis zwischen der vorgedrückten Anlaufzone 21 und der gegenüberliegenden Stirnseite der Welle 13 das gewünschte Axialspiel (vorzugsweise≪ 0,05 mm) erreicht ist. Vorteilhafterweise ist eine zumindest teilweise plastische Verformung der Anlaufscheibe 2 durch die Einstellschraube 3 zumindest im Bereich ihrer Anlaufzone 21 vorgesehen. Zu diesem Zweck ist - wie aus FIG 7,8 ersichtlich -die Anlaufzone 21 bis auf verbleibende Verbindungsstege 24 durch Ausschnitte 23 gegenüber den randseitigen Klemmbereichen 22 verformbar freigelegt.

Zum Einsatz eines in den Ausführungsbeispielen dargestellten Motorantriebs z.B. als Fensterheberantrieb in einem Kraftfahrzeug kann auf einfache Weise eine Feuchtigkeitsabdichtung des gesamten Aggregats dadurch erreicht werden, daß das Motorgehäuse 11 als topfförmiges und somit am rechten Wellenende geschlossenes Gehäuse ausgebildet und das Getriebegehäuse an der zur äußeren Bedienung der Einstellschraube 3 vorgesehenen Gehäuseöffnung 18 des Getriebegehäuses 12 durch eine Dichtung nach Beendigung des Einstellvorgangs für das Axialspiel abdichtbar ist. Nach einer ersten Ausgestaltung der Erfindung ist zur Abdichtung gemäß FIG 2 an die vorzugsweise aus Kunststoff hergestellte Einstellschraube 3 ein Dichtrand 32 einstückig mitangespritzt, der beim Eindrehen der Einstellschraube 3 aufgrund seiner sich nach außen konisch erweiternden Umfangskontur dichtend in die Gehäuseöffnung 18 des Getriebegehäuses 12 einpreßt. Wie aus FIG 2 weiter ersichtlich, ist in vorteilhafter Weise an die Einstellschraube 3 als zu den Verstemmlappen 17 ergänzende oder alternative Sicherung gegen ein ungewolltes Rückdrehen der Einstellschraube 3 nach Erreichen der vorgesehenen Einstellung ein Sperrzahnrändel 31 mit gemäß FIG 3 entgegen der Einstelldrehrichtung n gerichteten Sperrzähnen vorgesehen, die sich bei einem Rückdrehversuch der Einstellschraube 3 in die das Sperrzahnrändel 31 übergreifende Gehäusekontur der Gehäuseöffnung 18 festkrallen; auch dieses Sperrzahnrändel 31 ist zweckmäßigerweise einstückiges Bestandteil der Einstellschraube 3.

FIG 5,6 zeigen eine weitere, nach einer Ausgestaltung der Erfindung vorgesehene Abdichtmöglichkeit der Gehäuseöffnung 18 bei zuvor freier Einstellmöglichkeit der Einstellschraube 3 und gleichzeitiger Mitbenutzungsmöglichkeit als Rückdrehsicherung; dazu ist eine Dichtkappe 5 mit einer in die Gehäuseöffnung 18 dichtend einsetzbaren, zur Einstellschraube 3 konzentrischen, Dichthülse 51 und einem demgegenüber insbesondere radial und axial elastischen, geschlossenen faltenbalgartigen Dichtmantel 52 zwischen der Dichthülse 51 und dem Außenumfang der Einstellschraube 3 vorgesehen, wobei Dichthülse 51, Dichtmantel 52 und Einstellschraube 3 zweckmäßigerweise aus einem einstückigen Kunststoff-Spritzgußteil bestehen.

FIG 5 zeigt die an die Einstellschraube 3 angeformte Dichtkappe in einer Vormontagestellung zu Beginn des Justiervorganges, in der die Anlaufscheibe 2 noch nicht gegenüber der Stirnseite der Welle 13 vorgedrückt und die Dichtkappe 5 ohne Behinderung des Einstellvorgangs der Einstellschraube 3 außerhalb der Gehäuseöffnung 18 gehalten ist.

FIG 6 zeigt die Anordnung gemäß FIG 5 nach vollzogenem Einstellvorgang des Axialspiels, in dem aus der Anlaufscheibe 2 durch die gegendrückende Einstellschraube 3 die Anlaufzone 21 gegenüber den Randbereichen der Anlaufscheibe 2 auf das Stirnende der Welle 13 herausgedrückt und die Dichthülse 51 unter elastischer Verformung des Dichtmantels 52 in die Gehäuseöffnung 18 dichtend eingedrückt ist; zur Verstärkung der Dichtfähigkeit der Dichthülse 51 kann diese nach einer Ausgestaltung der Erfindung an ihrem Außenumfang mit umlaufenden elastischen Dichtlippen 511 zusätzlich versehen sein.

## Ansprüche

1. Anordnung zur Begrenzung des Axialspiels der Welle (13) eines Motorantriebs, insbesondere eines Motorantriebs (1) für einen Kraftfahrzeug-Hilfsantrieb, mit zumindest einer axial vor dem einen Wellenende im Gehäuse (Getriebegehäuse 12) des Motorantriebs randseitig gehaltener Anlaufscheibe (2) mit einer, aufgrund eines jeweiligen Vergleichs zwischen Ist-Axialspiel und Soll-Axialspiel bis zu einem definierten Abstand zu dem Wellenende axial gedrückten Anlaufzone (21), **gekennzeichnet** durch eine in die Anlaufscheibe (2) von einer vorgelagerten, gehäuseseitig abgestützten Einstellschraube (3), insbesondere einer Serien-Normschraube, axial gedrückten Anlaufzone (21).

2. Anordnung nach Anspruch 1, **gekennzeichnet** durch eine zumindest teilweise plastische Verformung der Anlaufscheibe (2) durch die Einstellschraube (3).

3. Anordnung nach Anspruch 2, **dadurch gekennzeichnet,** daß die Anlaufscheibe (2) randseitige Klemmbereiche (22) zu ihrer Halterung in dem Gehäuse (Getriebegehäuse 12) des Motorantriebs aufweist und die Anlaufzone (21) bis auf verbleibende Verbindungsstege (24) durch Ausschnitte (23) entsprechend frei verformbar freigelegt ist.

4. Anordnung mit einem Motorantrieb mit zumindest im Bereich der Anlaufscheibe (2) radial teilbarem bzw. radial durch einen Gehäusedeckel (19) verschließbarem Gehäuse (Getriebegehäuse 12) nach zumindest einem der Ansprüche 1 bis 3, **dadurch gekennzeichnet,** daß die Anlaufscheibe (2) und/oder die Einstellschraube (3) in gehäuseseitigen Taschen (14 und/oder 15) einsteckbar sind.

5. Anordnung mit einem Motorantrieb mit zumindest im Bereich der Anlaufscheibe (2) radial teilbarem bzw. radial durch einen Gehäusedeckel (19) verschließbarem Gehäuse (Getriebegehäuse 12) nach zumindest einem der Ansprüche 1 bis 4, **dadurch gekennzeichnet,** daß als gehäuseseitige Schraubfassung für die Einstellschraube (3) eine korrespondierende, in eine gehäuseseitige Tasche (15) radial einsteckbare Schraubenmutter (4) vorgesehen ist.

6. Anordnung nach Anspruch 4 und/oder 5, **dadurch gekennzeichnet,** daß die Anlaufscheibe (2) und/oder die Einstellschraube (3) und/oder die Schraubenmutter (4) in ihren gehäuseseitigen Taschen (14 und/oder 15 und/oder 16) durch Klemmschluß fixierbar sind.

7. Anordnung nach Anspruch 4 und/oder 5, **dadurch gekennzeichnet,** daß die Anlaufscheibe (2) und/oder die Einstellschraube (3) und/oder die Schraubenmutter (4) in ihren gehäuseseitigen Taschen (14 und/oder 15 und/oder 16) durch Verstemmschluß (Verstemmlappen 17) fixierbar sind.

8. Anordnung nach zumindest einem der Ansprüche 1 bis 7, **gekennzeichnet** durch eine Einstellschraube (3) aus Kunststoff.

9. Anordnung nach Anspruch 8, **dadurch gekennzeichnet,** daß die Einstellschraube (3) mit einem, ein Rückdrehen durch Verhaken in ihrer gehäuseseitigen Fassung hindernden, Sperrzahnrändel (31) versehen ist.

10. Anordnung mit einer von axial durch eine Gehäuseöffnung (18) verstellbaren Einstellschraube (3) nach Anspruch 8 und/oder 9, **dadurch gekennzeichnet,** daß die Gehäuseöffnung (18) durch eine an die Einstellschraube (3) angeformte Dichtkappe (5) nach außen feuchtigkeitsdicht abschließbar ist.

11. Anordnung nach Anspruch 10, **dadurch gekennzeichnet,** daß die Dichtkappe (5) aus einer in die Gehäuseöffnung (18) dichtend einsetzbaren, zur Einstellschraube (3) konzentrischen Dichthülse (51) und einem insbesondere radial und axial elastischen faltenbalgartigen Dichtmantel (52) zwischen der Dichthülse (51) und dem Außenumfang der Einstellschraube (3) besteht.

12. Anordnung nach Anspruch 10 und/oder 11, **dadurch gekennzeichnet,** daß die Dichthülse (51) an ihrem Außenumfang mit umlaufenden elastischen Dichtlippen (511) versehen ist.

EP 0 394 512 A1

FIG 1

FIG 2

FIG 3

FIG 4

FIG 5

FIG 7

FIG 8

FIG 6

| Europäisches Patentamt | **EUROPÄISCHER RECHERCHENBERICHT** | Nummer der Anmeldung |
|---|---|---|
| | | EP 89 10 7466 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 549 218 (E.C. CAGNON et al.) * Spalte 2, Zeile 34 - Spalte 3, Zeile 14 * | 1,10 | H 02 K 7/08 F 16 C 17/08 |
| A | EP-A-0 082 375 (SIEMENS) * Seite 5, Zeile 15 - Seite 7, Zeile 32; Ansprüche 4-7; Figuren 5,7 * | 1 | |
| A | GB-A-2 086 145 (JIDOSHA DENKI KOGYO) * Seite 2, Zeile 80 - Seite 2, Zeile 104; Figur 4 * | 1 | |
| A | FR-A-2 532 699 (GENERAL MOTORS) * Seite 5, Zeile 2 - Seite 6, Zeile 7 * | 4 | |
| A | PATENT ABSTRACTS OF JAPAN Band 9, Nr. 154 (E-325)(1877), 28. Juni 1985; & JP - A - 60 32540 (MITSUBISHI DENKI K.K.) 19.02.1985 * das ganze Dokument * | 10 | |
| D,A | EP-A-0 133 527 (SIEMENS) * Seite 4, Zeilen 1-31; Figuren 1-4 * | 1-4 | **RECHERCHIERTE SACHGEBIETE (Int. Cl.5)** H 02 K 7/00 F 16 C 17/00 |

Der vorliegende Recherchenbericht wurde für alle Patentansprüche erstellt

| Recherchenort | Abschlußdatum der Recherche | Prüfer |
|---|---|---|
| BERLIN | 27-11-1989 | GESSNER E A F |